# EUROPEAN PATENT APPLICATION

(11) **EP 2 821 917 A1**
(43) Date of publication of application: **07.01.2015**
(21) Application number: 14170467.6
(22) Date of filing: 29.05.2014
(51) Int. Cl.: G06F 9/30

(54) **Processing device and control method of processing device**

(30) Priority: 04.07.2013 JP 2013141015
(71) Applicant: FUJITSU LIMITED, Kawasaki-shi, Kanagawa 211-8588 (JP)
(72) Inventor: Akizuki, Yasunobu, Kawasaki-shi, Kanagawa 211-8588 (JP)
(74) Representative: Cooper-Rolfe, Elizabeth Louise

(57) **Abstract**

A processing device has: a plurality of registers configured to correspond to a plurality of accessible register windows; and an instruction decoder configured to inhibit, when, during an execution of a first instruction of changing a number of a current register window by one, a second instruction of changing the number of the current register window by one in a direction same as a direction of the first instruction is input, a decode of the second instruction until when the execution of the first instruction is completed, and to perform, when, during the execution of the first instruction of changing the number of the current register window by one, a second instruction of changing the number of the current register window by one in a direction opposite to the direction of the first instruction is input, a decode of the second instruction during the execution of the first instruction.

## Description

### FIELD

The embodiments discussed herein are directed to a processing device and a control method of the processing device.

### BACKGROUND

A processing device having a register file including a plurality of register windows, and an arithmetic unit executing an instruction in which data held in the register file is set as an operand, has been known (refer to Patent Document 1, for example). A current window pointer unit holds address information which designates, among the plurality of register windows included by the register file, a register window to be a current window. When a window switching instruction indicating a switching of the current window is decoded, the address information held by the current window pointer unit is updated. A period of time from when the decode of the window switching instruction is started to a point of time right before a commit is started, is controlled so that the arithmetic unit can read, from the register file, data of a first register window designated by address information before the update and data of a second register window designated by address information after the update.

Further, there has been known a processing device having at least one register file having a plurality of register windows formed of sets of registers in an order of in registers, local registers and out registers, in which the plurality of register windows are formed in a ring shape (refer to Patent Document 2, for example). A current window pointer unit indicates, when accessing a register window, a current register window position by a pointer value. A current register reads data held by a register window designated by the pointer value indicated by the current window pointer unit from the register file, and holds the data. A replacement buffer is mounted between the register file and the current register, and holds data transferred from the register file to the current register. An arithmetic unit executes a window switching instruction and processing of instruction related to data held in the current register or data held in the replacement buffer. If, when the arithmetic unit executes a window switching instruction of executing a switching of a register window, a window switching instruction is decoded, data of a register window designated by the current window pointer unit by the execution of the window switching instruction is transferred to the replacement buffer.

Further, there has been known a processing device having an arithmetic part performing arithmetic processing, and a register window having K pieces of windows each including N pieces of registers, in which it is configured such that some registers forming the respective windows are shared by registers forming the windows at both sides, and the shared part is used for a delivery of argument at a time of subroutine call (refer to Patent Document 3, for example). A current window selecting unit selects one piece of window out of the K pieces of windows. A register selecting unit selects a read register based on a read address. A control part outputs a window address signal for selecting a window with the use of the current window selecting unit.
Patent Document 1: Japanese Laid-open Patent Publication No. 2008-234075
Patent Document 2: Japanese Laid-open Patent Publication No. 2007-87108
Patent Document 3: International Publication Pamphlet No. WO 2010/016097

If, during an execution of window switching instruction of changing a number of register window by one, another window switching instruction is input, a decode of the input window switching instruction is waited until when the execution is completed. In such a case, a speed of executing the instruction is lowered, which is a problem.

### SUMMARY

Preferred embodiments of the present invention seek to provide a processing device capable of reducing a waiting time of an instruction of changing a number of register window by one, and a control method of the processing device.

According to a first example a processing device has: a plurality of registers configured to correspond to a plurality of accessible register windows; and an instruction decoder configured to inhibit, when, during an execution of a first instruction of changing a number of a current register window by one, a second instruction of changing the number of the current register window by one in a direction same as a direction of the first instruction is input, a decode of the second instruction until when the execution of the first instruction is completed, and to perform, when, during the execution of the first instruction of changing the number of the current register window by one, a second instruction of changing the number of the current register window by one in a direction opposite to the direction of the first instruction is input, a decode of the second instruction during the execution of the first instruction.

### BRIEF DESCRIPTION OF DRAWINGS

FIG. 1 is a diagram illustrating a configuration example of a processing system according to the present embodiment;
FIG. 2 is a diagram illustrating a configuration example of a core (processing device) in FIG. 1;
FIG. 3 is a diagram illustrating a configuration example of a fixed-point register in FIG. 2;
FIG. 4 is a diagram illustrating a configuration example of a register renaming map;
FIG. 5 is a diagram illustrating a configuration example of a part of the core (processing device) in FIG. 2;
FIG. 6 is a flow chart illustrating a control method of an instruction decoder;
FIG. 7 is a diagram illustrating a control method in a case where a SAVE instruction is input and then a RESTORE instruction is input;
FIG. 8 is a diagram illustrating a control method in a case where the SAVE instruction is input and then the RESTORE instruction is input;
FIG. 9 is a diagram illustrating a control method in a case where the SAVE instruction is input and then a SAVE instruction is input;
FIG. 10 is a diagram illustrating a configuration example of a circuit of controlling the register renaming map;
FIG. 11 is a diagram illustrating a control method of an instruction of switching a register window;
FIG. 12 is a diagram illustrating a configuration example of a generation circuit of signals SAVE_PENDING and RESTORE_PENDING in FIG. 11;
FIG. 13 is a diagram illustrating a configuration example of a generation circuit of a switching direction LAST_SAVE in FIG. 11;
FIG. 14 is a diagram illustrating a configuration example of a generation circuit of an instruction decode inhibiting signal INH_D_REL;
FIG. 15 is a diagram illustrating a read register window; and
FIG. 16 is a diagram illustrating a read register window counter.

### DESCRIPTION OF EMBODIMENT

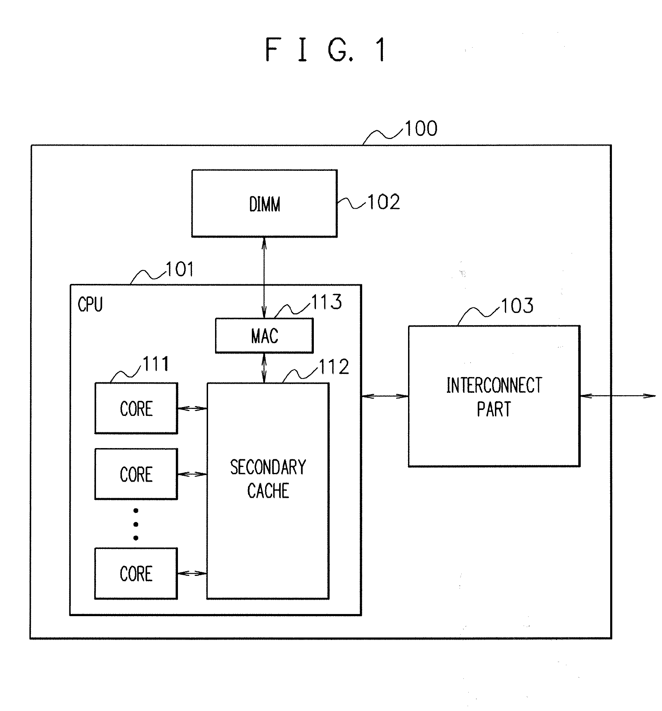

FIG. 1 is a diagram illustrating a configuration example of a processing system 100 according to the present embodiment. The processing system 100 has a central processing unit (CPU) 101, a dual inline memory module (DIMM) 102, and an interconnect part 103. The central processing unit 101 has a plurality of cores 111, a shared secondary cache memory 112 and a memory access controller (MAC) 113. The memory access controller 113 controls a memory access of the dual inline memory module 102 and the secondary cache memory 112. Accordingly, the central processing unit 101 can input/output data into/from the dual inline memory module 102. The interconnect part 103 can input/output data into/from another device.

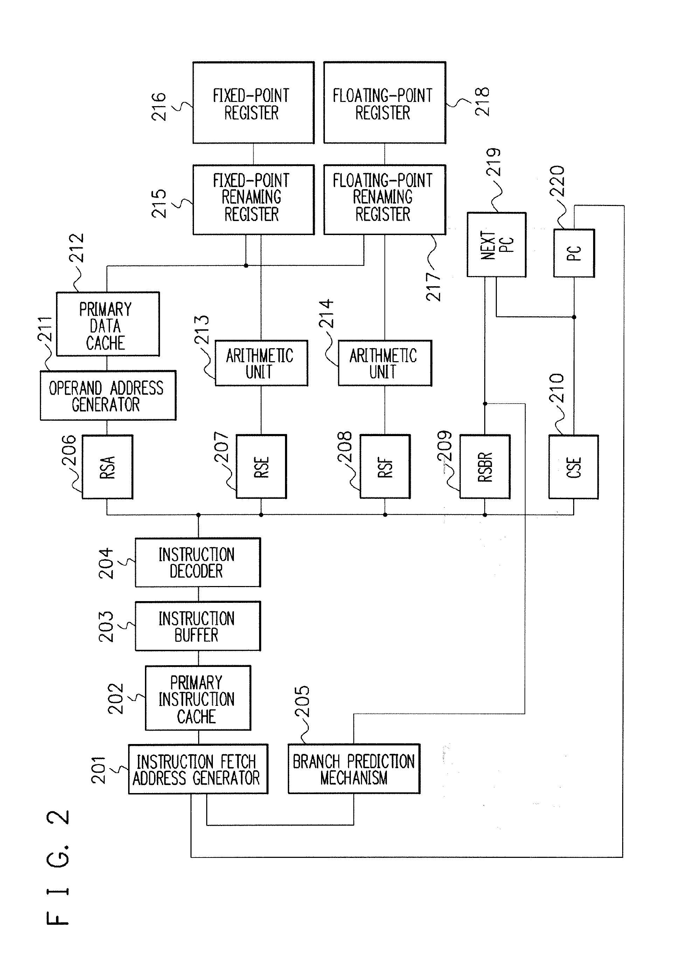

FIG. 2 is a diagram illustrating a configuration example of the core (processing device) 111 in FIG. 1. In order to fetch an instruction, an instruction fetch address generator 201 selects an instruction address input from a program counter 220 or a branch prediction mechanism 205, and issues an instruction fetch request of the selected instruction address to a primary instruction cache memory 202. The primary instruction cache memory 202 outputs an instruction in accordance with the instruction fetch request to an instruction buffer 203. The instruction buffer buffers the instruction, and supplies the instruction to an instruction decoder 204 in an order of the program. The instruction decoder 204 performs decode processing of the instruction in the order of the program, and issues the instruction. The instruction decoder 204 creates, in accordance with a type of the instruction to be decoded, necessary entries for a reservation station for generating main storage operand address (RSA: Reservation Station for Address generate) 206 for controlling the execution of the instruction, a reservation station for fixed-point arithmetic (RSE: Reservation Station for Execute) 207, a reservation station for floating-point arithmetic (RSF: Reservation Station for Floating) 208, and a reservation station for branch instruction (RSBR: Reservation Station for BRanch) 209. Further, the instruction decoder 204 creates an entry in a commit stack entry (CSE) 210 for controlling a completion of instruction with respect to all of decoded instructions. When the entries are created in the RSA 206, the RSE 207, and the RSF 208 with respect to the decoded instruction, an out-of-order execution can be performed by renaming a register corresponding to a fixed-point renaming register 215 and a floating-point renaming register 217. An operand address generator 211 generates, in accordance with the entry of the RSA 206, an address of operand, and outputs the address to a primary data cache memory 212. The primary data cache memory 212 outputs data of the generated operand address to the fixed-point renaming register 215 or the floating-point renaming register 217. An arithmetic unit 213 performs fixed-point arithmetic in accordance with the entry of the RSE 207, and an arithmetic unit 214 performs floating-point arithmetic in accordance with the entry of the RSF 208. A result of execution of the arithmetic is stored in the fixed-point renaming register 215 and the floating-point renaming register 217. The instruction executed out-of-order from the reservation stations 206 to 209 is completed in the order of program by the control of the CSE 210, and programmable resources such as the fixed-point register 216, the floating-point register 217, and program counters 219, 220 are updated with respect only to the completed instruction. The program counter 220 outputs an address of currently executed instruction. The program counter 219 outputs an address next to the address output by the program counter 220. The branch prediction mechanism 205 predicts whether or not a branch instruction is branched, in accordance with the entry of the RSBR 209, and outputs an address of instruction to be executed next.

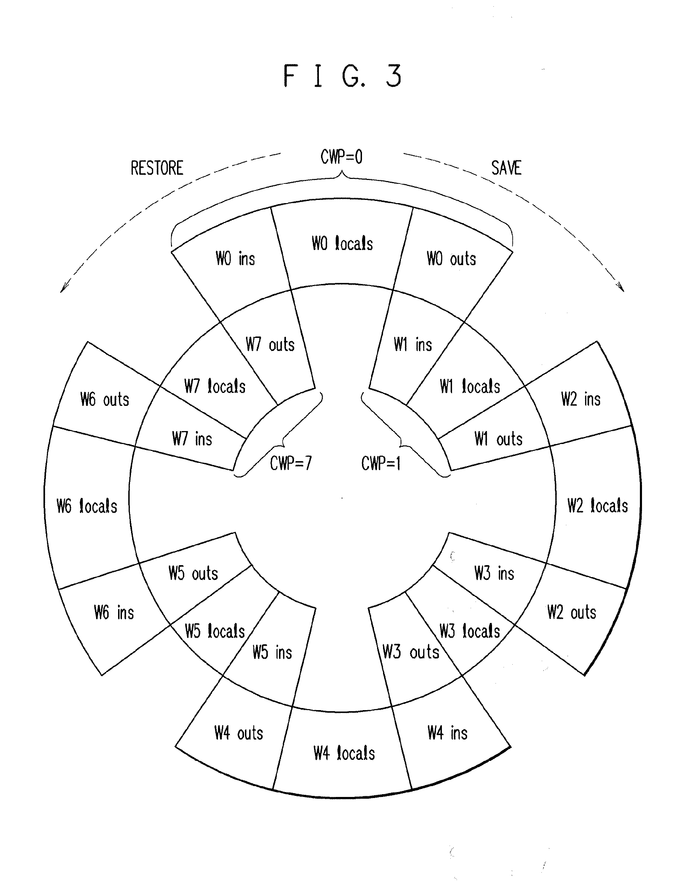

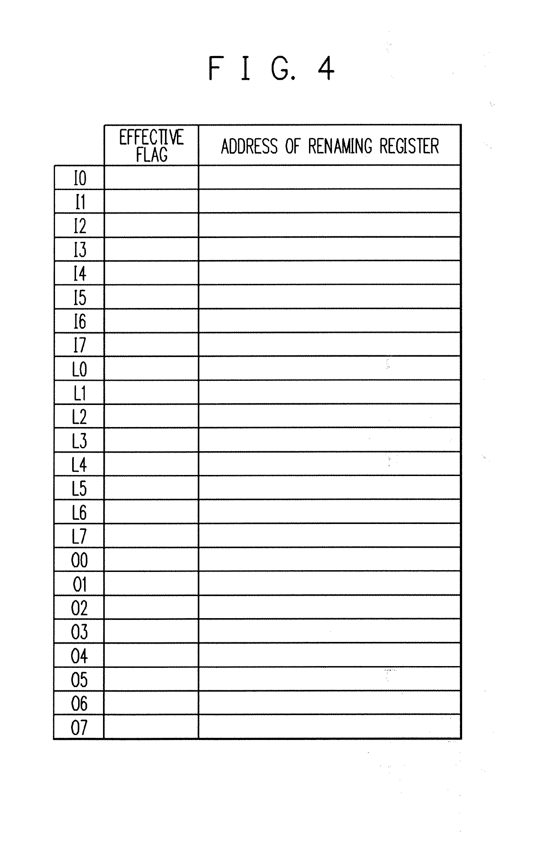

FIG. 3 is a diagram illustrating a configuration example of the fixed-point register 216 in FIG. 2. The fixed-point register 216 has eight register windows W0 to W7. Each of the register windows W0 to W7 has in registers ins, local registers locals, and out registers outs. As illustrated in FIG. 4, the in registers ins have eight registers 10 to I7, the local registers locals have eight registers L0 to L7, and the out registers outs have eight registers O0 to 07. The plurality of register windows W0 to W7 are formed in a ring shape. Some registers ins and outs forming the respective register windows W0 to W7 are shared by some registers ins and outs forming the register windows W0 to W7 at both sides. For example, the in registers ins of the register window W0 are shared by the out registers outs of the register window W7, and the out registers outs of the register window W0 are shared by the in registers ins of the register window W1. A number of the register windows W0 to W7 being used is held by a current window pointer (CWP). The register windows W0 to W7 are coupled in a ring shape, and the register windows are managed based on the register window number. When the CWP equals to 0, the register window W0 is a register window which is in use, when the CWP equals to 1, the register window W1 is a register window which is in use, and when the CWP equals to 7, the register window W7 is a register window which is in use. A register window switching instruction includes a SAVE instruction in which the number of CWP is incremented by one (+1), and a RESTORE instruction in which the number of CWP is decremented by one (-1). For example, when the SAVE instruction is executed in a state where the CWP equals to 0, the CWP becomes 1. When the RESTORE instruction is executed in a state where the CWP equals to 0, the CWP becomes 7. The CWP is updated when the instruction of switching the register window is completed.

FIG. 4 is a diagram illustrating a configuration example of a register renaming map. As described above, the in registers ins in FIG. 3 have the eight registers 10 to I7, the local registers locals in FIG. 3 have the eight registers L0 to L7, and the out registers outs in FIG. 3 have the eight registers O0 to 07. The register renaming map has an address of the renaming register 215 of a writing destination assigned at a time of instruction decode with respect to a register address of a writing destination of instruction when the instruction is decoded, and an effective flag, and is controlled by the instruction decoder 204. When the registered register renaming map is effective, the effective flag is 1 (effective), and when it is used as a source register by a succeeding instruction, by using an address of the renaming register 215, the control of register renaming is performed. Upon the completion of instruction, a content of the renaming register 215 is written into the register 216. Specifically, the renaming register 215 stores a content of the register 216. When the renaming register of the writing destination of the completed instruction and the address of the renaming register 215 registered in the renaming map are the same, the instruction decoder 204 sets the effective flag of the renaming map to 0, and invalidates the registered renaming map.

Until when data is written into the register 216 by the completion of instruction, data being a writing target is written into the renaming register 215. A succeeding instruction can be processed at high speed by using the data of the renaming register 215. When the data is written into the register 216 by the completion of instruction, the succeeding instruction uses the data of the register 216.

When the SAVE instruction or the RESTORE instruction is executed for switching the register windows W0 to W7, a succeeding instruction has to be read from a new register window. For this reason, the register renaming map is switched to a new renaming map of register windows W0 to W7 when decoding an instruction of switching the register windows W0 to W7. At this time, there is no information regarding the new renaming map of register windows, so that the existing register renaming map is reset.

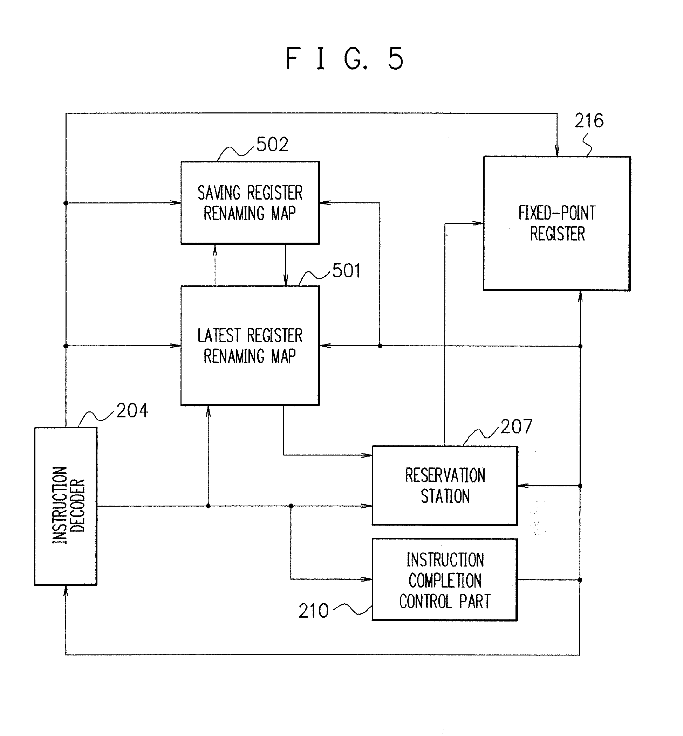

FIG. 5 is a diagram illustrating a configuration example of a part of the core (processing device) 111 in FIG. 2. The core 111 has, in addition to the instruction decoder 204, the reservation station 207, the instruction completion control part (CSE) 210 and the fixed-point register 216, a latest register renaming map storage part 501 and a saving register renaming map storage part 502. The latest register renaming map storage part 501 stores the latest register renaming map (FIG. 4). The saving register renaming map storage part 502 stores the immediately preceding register renaming map (FIG. 4).

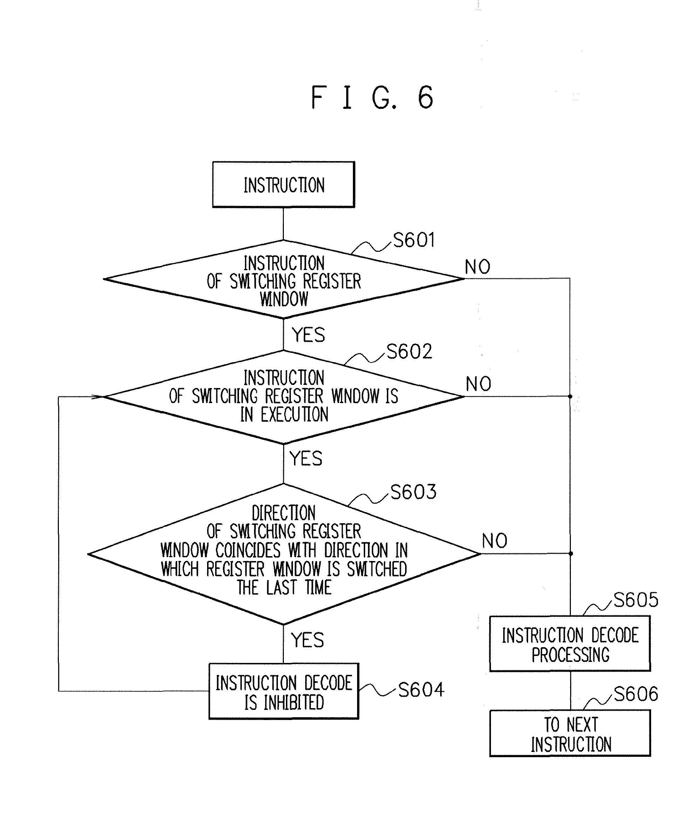

FIG. 6 is a flow chart illustrating a control method of the instruction decoder 204. In step S601, the instruction decoder 204 determines whether or not an input instruction is an instruction of switching the register window (SAVE instruction or RESTORE instruction). When the input instruction is the instruction of switching the register window, the process proceeds to step S602, and when it is not the instruction of switching the register window, the process proceeds to step S605.

In step S602, the instruction decoder 204 determines, based on an instruction completion notice from the instruction completion control part 210, whether or not the instruction of switching the register window is in execution. When the instruction is in execution, the process proceeds to step S603, and when it is not in execution, the process proceeds to step S605. Specifically, when, during the execution of the instruction of switching the register window, another instruction of switching the register window is input into the instruction decoder 204, the process proceeds to step S603.

In step S603, the instruction decoder 204 determines whether or not a direction of switching the register window coincides with a direction in which the register window is switched the last time. When both of a preceding instruction and a succeeding instruction are the SAVE instructions, since the both instructions indicate a switching in an increment direction, it is determined that the directions coincide. When both of the preceding instruction and the succeeding instruction are the RESTORE instructions, since the both instructions indicate a switching in a decrement direction, it is determined that the directions coincide. When the preceding instruction and the succeeding instruction are the SAVE instruction and the RESTORE instruction, respectively, it is determined that the switching directions do not coincide. When the directions coincide, the process proceeds to step S604, and when they do not coincide, the process proceeds to step S605.

In step S604, the instruction decoder 204 inhibits the decode of the above-described input instruction of switching the register window, and the process returns to step S602. Specifically, the instruction decoder 204 makes the decode processing of the succeeding register window switching instruction wait until the execution of the preceding register window switching instruction is completed.

In step S605, the instruction decoder 204 performs the decode processing of the above-described input instruction. After that, in step S606, processing of the next instruction is conducted.

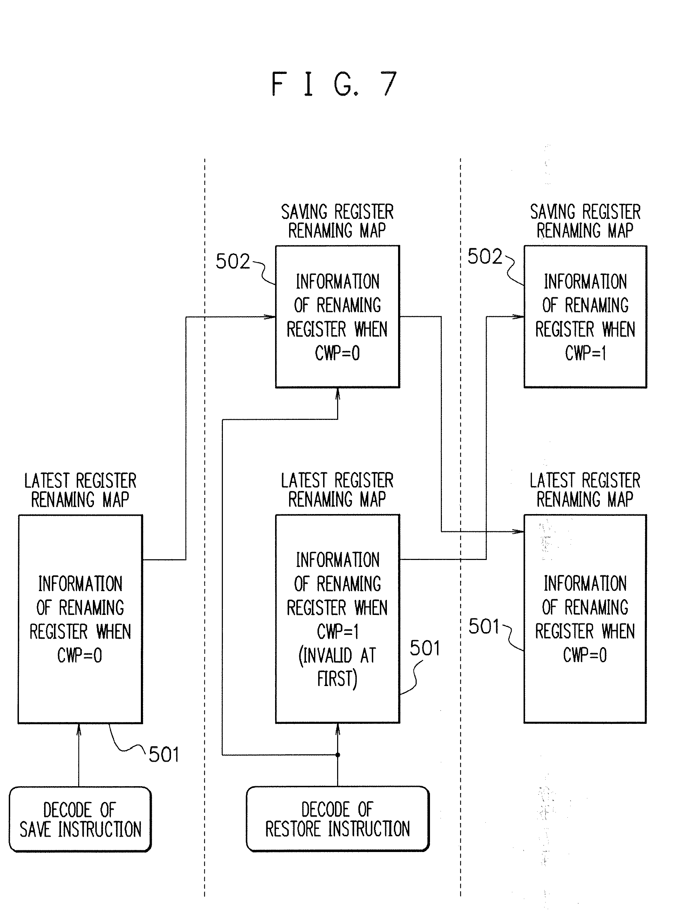

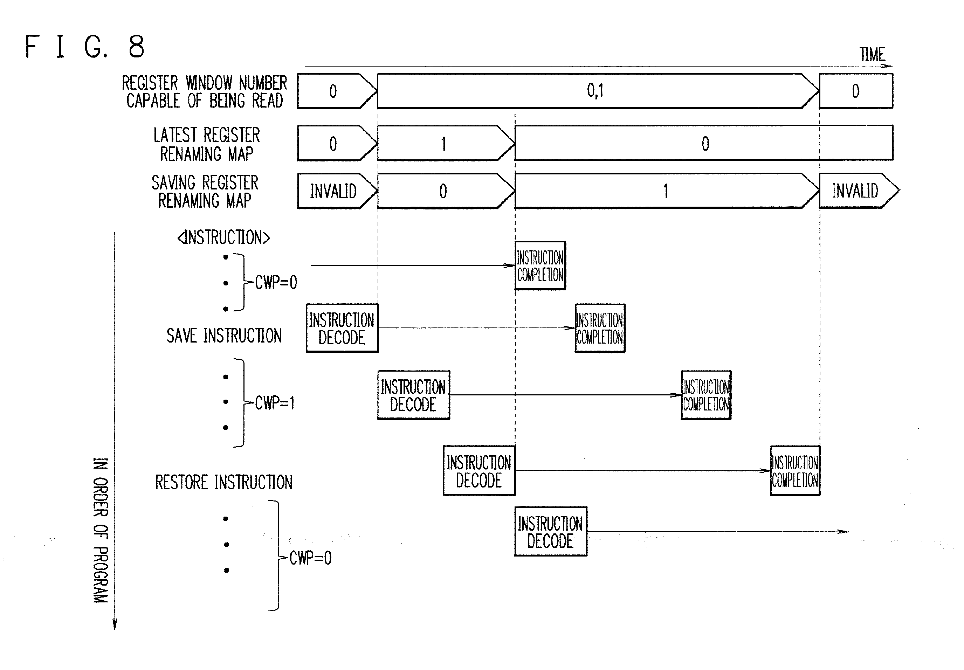

FIG. 7 and FIG. 8 are diagrams illustrating a control method in a case where the SAVE instruction is input and then the RESTORE instruction is input, and illustrating a case where the process proceeds to step S605 from step S603 in FIG. 6. At first, the latest register renaming map storage part 501 stores information of the renaming register when the CWP equals to 0 (FIG. 4), for example, and the content of the saving register renaming map storage part 502 is invalid. An instruction under this state is executed by using the information of the renaming register when the CWP equals to 0 (FIG. 4) stored in the latest register renaming map storage part 501.

Next, the instruction decoder 204 decodes the SAVE instruction. The CWP of 0 at the time of decoding the instruction is incremented to be 1. The information of the renaming register when the CWP equals to 0 stored in the latest register renaming map storage part 501 is copied to the saving register renaming map storage part 502. In the latest register renaming map storage part 501, the latest information of the renaming register when the CWP equals to 1 is written. After that, the instruction before the SAVE instruction is executed under the state where the CWP equals to 0, and the instruction after the SAVE instruction is executed under the state where the CWP equals to 1.

Next, the instruction decoder 204 decodes the RESTORE instruction. The CWP of 1 at the time of decoding the instruction is decremented to be 0. The information of the renaming register when the CWP equals to 1 stored in the latest register renaming map storage part 501 is copied to the saving register renaming map storage part 502. The information of the renaming register when the CWP equals to 0 stored in the saving register renaming map storage part 502 is copied to the latest register renaming map storage part 501. Accordingly, a succeeding instruction of the RESTORE instruction can use the information of the renaming register when the CWP equals to 0 stored in the latest register renaming map storage part 501.

When the SAVE instruction is input and then the RESTORE instruction is input, the number of CWP is changed from 0 to 1 to 0, and thus it returns to its original number. By corresponding to this, the information of the renaming register when the CWP equals to 0 is moved from the latest register renaming map storage part 501 to the saving register renaming map storage part 502 to the latest register renaming map storage part 501. By providing the saving register renaming map 502, the information of the renaming register when the CWP equals to 0 can be returned to the latest register renaming map storage part 501 without being deleted. Accordingly, when the SAVE instruction is in execution and the process proceeds to step S605 from step S603, the decode of the RESTORE instruction is not inhibited and the decode processing of the RESTORE instruction can be conducted, resulting in that the speed of the processing can be increased. Note that the same applies to not only the case where the preceding instruction is the SAVE instruction and the succeeding instruction is the RESTORE instruction, but also a case where the preceding instruction is the RESTORE instruction and the succeeding instruction is the SAVE instruction.

In the present embodiment, when the instruction of switching the register window is decoded, the direction of switching the register window is held. The direction of switching the register window indicates a direction in which the number of CWP is incremented by one or decremented by one. Further, at the time of decoding the instruction, the current register renaming map is not discarded but is held by being stored in the saving register renaming map storage part 502. When the instruction registered in the saving register renaming map storage part 502 is completed, the effective flag of the saving renaming register map storage part 502 is also invalidated.

In a case where an instruction of switching the register window again is decoded until when the instruction of switching the register window is completed, if a switching direction of the register window and the held switching direction do not coincide, the process proceeds to step S605 from step S603, in which the instruction can be decoded. At the time of decoding the instruction, the direction of switching the register window is updated and held. Further, by moving the information of the latest register renaming map storage part 501 to the saving register renaming map storage part 502, and by moving the information of the saving renaming map storage part 502 to the latest register renaming map storage part 501, the succeeding instruction can use a correct renaming map.

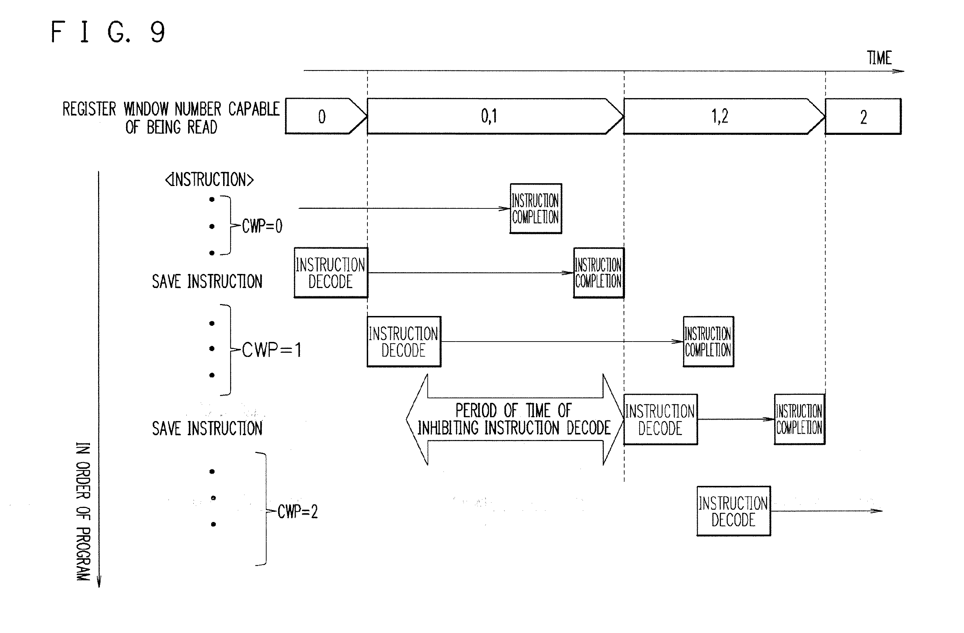

FIG. 9 is a diagram illustrating a control method in a case where the SAVE instruction is input and then the SAVE instruction is input, and illustrating a case where the process proceeds to step S604 from step S603 in FIG. 6. The process is the same as that of FIG. 8 up to a point of time before the SAVE instruction for the second time is input. When the SAVE instruction for the second time is input into the instruction decoder 204 during the execution of the SAVE instruction for the first time, the process proceeds to step S604 from step S603, and the decode of the SAVE instruction for the second time is inhibited. Further, after the execution of the SAVE instruction for the first time is completed, the process proceeds to step S605 from step S602, and the instruction decoder 204 performs the decode processing of the SAVE instruction for the second time. By processing the SAVE instruction for the second time, the CWP becomes 2, and since the register renaming map when the CWP equals to 2 is not held in the saving register renaming map storage part 502, the decode of the SAVE instruction for the second time is inhibited. Note that the same applies to not only the case where the preceding instruction is the SAVE instruction and the succeeding instruction is the SAVE instruction, but also a case where the preceding instruction is the RESTORE instruction and the succeeding instruction is the RESTORE instruction.

As described above, when an instruction of switching the register window is decoded, an instruction of switching the register window is in execution, and a switching direction of the instruction to be decoded and a switching direction of the register window of the last instruction of switching the register window coincide, the instruction decoder 204 inhibits the instruction decode. Further, the instruction decoder 204 inhibits the instruction decode until when the last instruction of switching the register window is completed.

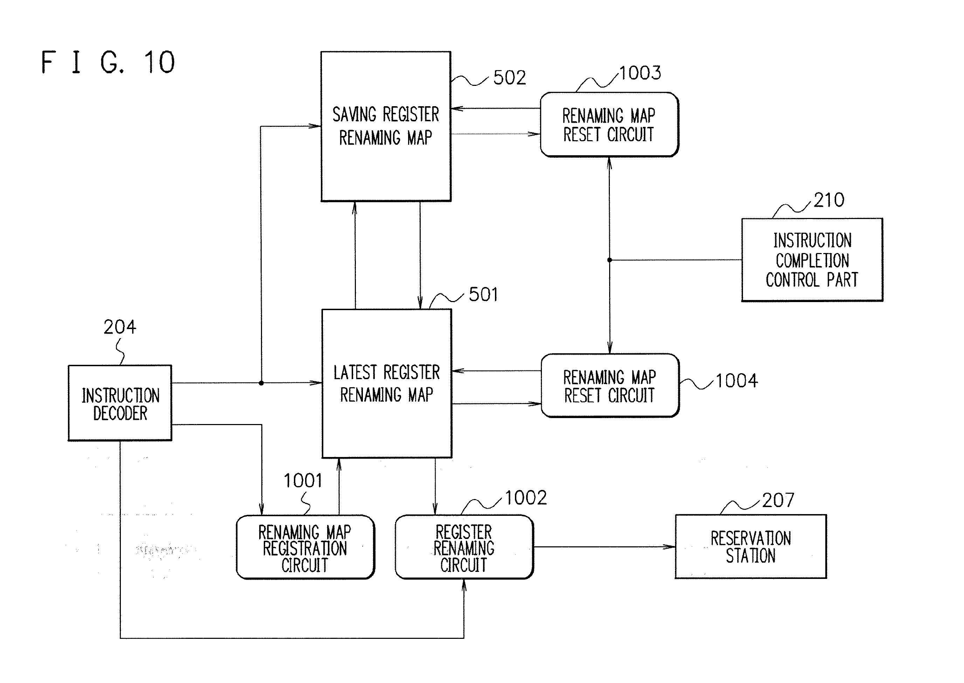

FIG. 10 is a diagram illustrating a configuration example of a circuit that controls the register renaming map. The instruction decoder 204 decodes the instruction of switching the register window. Subsequently, the instruction decoder 204 copies the renaming map of the register window before the switching, from the latest register renaming map storage part 501 to the saving register renaming map storage part 502. A renaming map registration circuit 1001 registers a new renaming map of the register window in the latest register renaming map storage part 501. A register renaming circuit 1002 uses information of the latest register renaming map storage part 501, and does not use information of the saving register renaming map storage part 502, for controlling the renaming register 215 at the time of the instruction decode.

After that, when the instruction decoder 204 decodes the instruction of switching the register window again, it moves the information of the latest register renaming map storage part 501 to the saving register renaming map storage part 502, and moves the information of the saving register renaming map storage part 502 to the latest register renaming map storage part 501. An address registered in the information of the latest register renaming map storage part 501 and the saving register renaming map storage part 502 after the instruction decode is directly moved in an effective state.

By the completion of the instruction, the data of the renaming register 215 is written into the fixed-point register 216. The saving register renaming map storage part 502 holds the registered address of the renaming register 215. When the instruction completion notice is input into a renaming map reset circuit 1004 from the instruction completion control part 210, and if the completed instruction coincides with the address registered in the latest register renaming map storage part 501, the renaming map reset circuit 1004 invalidates the address registered in the latest register renaming map storage part 501. In like manner, when the instruction completion notice is input into a renaming map reset circuit 1003 from the instruction completion control part 210, and if the completed instruction coincides with the address registered in the saving register renaming map storage part 502, the renaming map reset circuit 1003 invalidates the address registered in the saving register renaming map storage part 502. Accordingly, the latest register renaming map storage part 501 and the saving register renaming map storage part 502 can constantly maintain a state necessary for the latest register renaming.

Note that when the instruction of switching the register window is decoded during when the instruction of switching the register window is not in execution, the saving register renaming map storage part 502 is in a totally invalid state. This is because, when the instruction of switching the register window is not in execution, only one register window is used. For this reason, since the saving register renaming map storage part 502 is in a totally invalid state when the instruction of switching the register window is not in execution, there is no problem if the information of the saving register renaming map storage part 502 is moved to the latest register renaming map storage part 501.

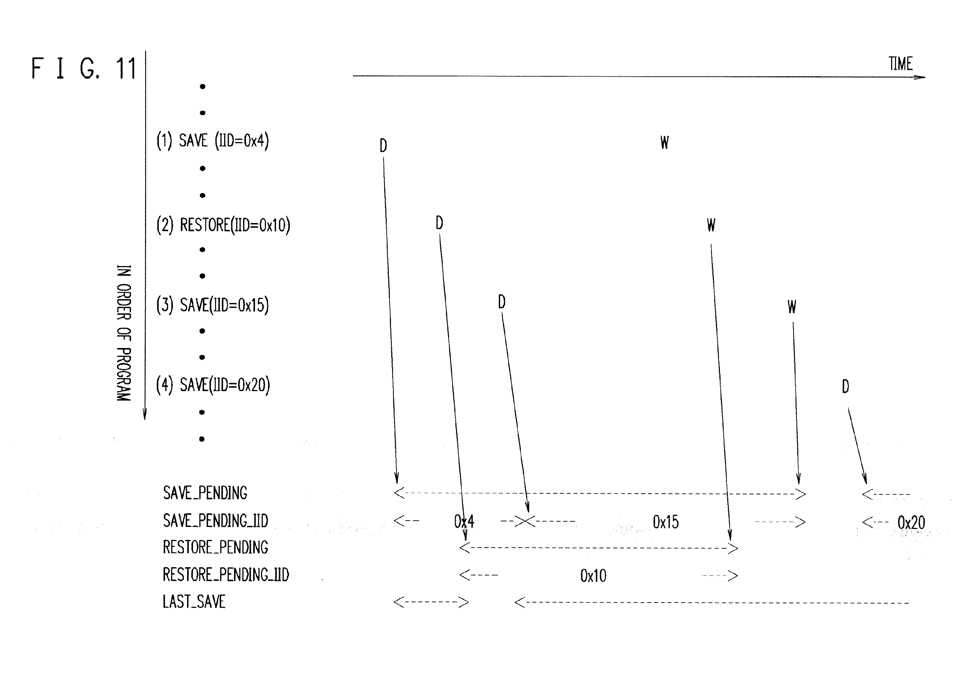

FIG. 11 is a diagram illustrating a control method of the instruction of switching the register window. When the instruction decoder 204 decodes the instruction of switching the register window, it holds signals SAVE_PENDING and RESTORE_PENDING indicating that the instruction of switching the register window is in execution. The signals SAVE_PENDING and RESTORE_PENDING are signals of the SAVE instruction and the RESTORE instruction, respectively, the signals are held until when the SAVE instruction and the RESTORE instruction are completed, and are reset when the SAVE instruction and the RESTORE instruction are completed. In a case where the SAVE instruction or the RESTORE instruction is decoded again when the signal SAVE_PENDING or RESTORE_PENDING indicating that the SAVE instruction or the RESTORE instruction is in execution is turned on, the instruction decode is inhibited, and the instruction decode is inhibited until when the signal SAVE_PENDING or RESTORE_PENDING indicating that the SAVE instruction or the RESTORE instruction is in execution is reset. Further, when the signal indicating that the SAVE instruction or the RESTORE instruction is in execution is turned on, an instruction other than the instruction of switching the register window is decoded and an instruction of using the fixed-point register 216 is decoded, a read address of the register 216 is created from the signal SAVE_PENDING or RESTORE_PENDING indicating that the SAVE instruction or the RESTORE instruction is in execution.

When the instruction decoder 204 decodes the instruction of switching the register window (SAVE instruction or RESTORE instruction), it stores the signal SAVE_PENDING or RESTORE_PENDING indicating that the instruction of switching the register window is in execution, and at the same time, it stores and holds an instruction identifier IID as SAVE_PENDING_IID or RESTORE_PENDING_IID. The instruction identifier IID indicates a number of entry of the CSE 210 controlling the completion of instruction, and is assigned at the time of instruction decode. When the SAVE instruction or the RESTORE instruction is completed, a coincidence of a completed instruction identifier IID and the instruction identifier SAVE_PENDING_IID or RESTORE_PENDING_IID indicating that the instruction of switching the register window is in execution is checked, and when the coincidence is confirmed, the signal SAVE_PENDING or RESTORE_PENDING indicating that the instruction is in execution is reset.

When the instruction decoder 204 decodes the instruction of switching the register window, it also stores and holds a direction LAST_SAVE of switching the register window. In a case of the SAVE instruction, 1 is stored in the switching direction LAST_SAVE, and in a case of the RESTORE instruction, 0 is stored in the switching direction LAST_SAVE. The switching direction LAST_SAVE stores a direction of switching the register window when decoding the instruction of switching the register window the last time.

The instruction decoder 204 performs, based on the signals SAVE_PENDING and RESTORE_PENDING indicating that the SAVE instruction and the RESTORE instruction described above are in execution, and the direction LAST_SAVE of switching the register window, a control of the decode of the succeeding instruction of switching the register window. When the instruction of switching the register window is input, the instruction decode is conducted normally if both of the SAVE instruction and the RESTORE instruction are not in execution. When either of the SAVE instruction and the RESTORE instruction is in execution, the instruction decode is conducted if a direction of switching the register window of the instruction of switching the register window and the direction LAST_SAVE of switching the register window the last time are different, and the instruction decode is inhibited if the directions are the same.

"D" in FIG. 11 indicates an instruction decode cycle. "W" in FIG. 11 indicates an instruction completion cycle. The signal SAVE_PENDING indicates that the SAVE instruction is in execution. The identifier SAVE_PENDING_IID indicates the instruction identifier IID of the SAVE instruction, and indicates the identifier IID of the SAVE instruction decoded the last time. The identifier RESTORE_PENDING_IID indicates the instruction identifier IID of the RESTORE instruction, and indicates the identifier IID of the RESTORE instruction decoded the last time. The switching direction LAST_SAVE stores "1" when the SAVE instruction is decoded, and stores "0" when the RESTORE instruction is decoded. The switching direction LAST_SAVE indicates the direction of switching the register window the last time.

Regarding the SAVE instruction of (1), the signals SAVE_PENDING and RESTORE_PENDING are "0", and thus both of the SAVE instruction and the RESTORE instruction are not in execution, so that the instruction decode D is conducted. At this time, the signal SAVE_PENDING becomes "1", and the identifier SAVE_PENDING_IID becomes "0x4" assigned at the time of instruction decode. The switching direction LAST_SAVE becomes "1".

Regarding the RESTORE instruction of (2), the signal SAVE_PENDING is "1", and thus the SAVE instruction is in execution, so that the instruction decoder 204 checks the switching direction LAST_SAVE. Since the switching direction LAST_SAVE is "1", the RESTORE instruction of (2) indicates a switching in a direction different from that of the previous switching instruction, so that it is judged that the RESTORE instruction can be decoded, and the instruction decode D is conducted. The signal RESTORE_PENDING becomes "1", and the identifier RESTORE_PENDING_IID becomes "0x10" assigned at the time of instruction decode. The switching direction LAST_SAVE becomes "0".

Regarding the SAVE instruction of (3), the signals SAVE_PENDING and RESTORE_PENDING are "1", and thus the SAVE instruction and the RESTORE instruction are in execution, so that the instruction decoder 204 checks the switching direction LAST_SAVE. At this time, since the switching direction LAST_SAVE is "0", the SAVE instruction of (3) indicates a switching in a direction different from that of the previous switching instruction, so that it is judged that the SAVE instruction can be decoded, and the instruction decode is conducted. At this time, the signal SAVE_PENDING maintains "1", and the identifier SAVE_PENDING_IID is updated from "0x4" to "0x15" assigned at the time of instruction decode. The switching direction LAST_SAVE becomes "1".

Regarding the SAVE instruction of (4), the signals SAVE_PENDING and RESTORE_PENDING are "1", and thus the SAVE instruction and the RESTORE instruction are in execution, so that the instruction decoder 204 checks the switching direction LAST_SAVE. At this time, since the switching direction LAST_SAVE is "1", the SAVE instruction of (4) indicates a switching in a direction same as that of the previous switching instruction, so that it is judged that it is not possible to decode the SAVE instruction, and the instruction decode is inhibited.

In the cycle W after the SAVE instruction of (1) is completed, the identifier IID (0x4) after completing the instruction and the identifier IID (0x15) stored in the identifier SAVE_PENDING_IID are compared, and the identifiers do not coincide, so that "1" is held in the signal SAVE_PENDING. In the cycle W after the RESTORE instruction of (2) is completed, the identifier IID (0x10) after completing the instruction and the identifier IID (0x10) stored in the identifier RESTORE_PENDING_IID are compared, and the identifiers coincide, so that the signal RESTORE_PENDING is reset to "0". In the cycle W after the SAVE instruction of (3) is completed, the identifier IID (0x15) after completing the instruction and the identifier IID (0x15) stored in the identifier SAVE_PENDING_IID are compared, and the identifiers coincide, so that the signal SAVE_PENDING is reset to "0".

Regarding the SAVE instruction of (4), since the signals SAVE_PENDING and RESTORE_PENDING become "0", it is judged that the instruction decode can be conducted, resulting in that the instruction decode D is conducted. At this time, the signal SAVE_PENDING becomes "1", and the identifier SAVE_PENDING_IID becomes "0x20" assigned at the time of instruction decode. The switching direction LAST_SAVE becomes "1".

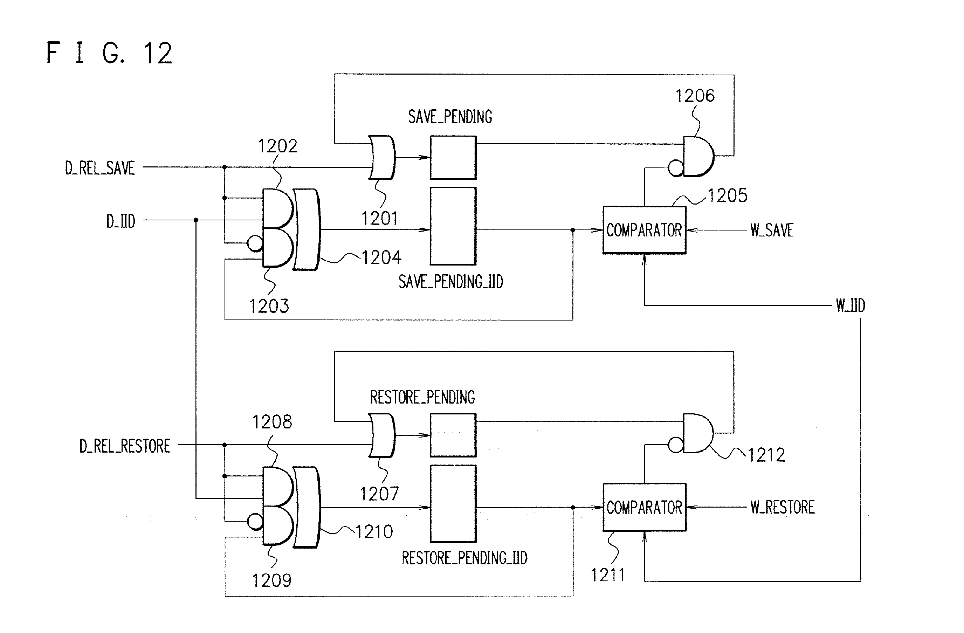

FIG. 12 is a diagram illustrating a configuration example of a generation circuit of the signals SAVE_PENDING and RESTORE_PENDING in FIG. 11. A signal D_REL_SAVE is a signal indicating that the SAVE instruction is decoded. An OR circuit 1201 outputs, when the signal D_REL_SAVE becomes "1", the signal SAVE_PENDING of "1". An identifier D_IID indicates an instruction identifier. When the signal D_REL_SAVE becomes "1", the identifier D_IID is output as the identifier SAVE_PENDING_IID by AND circuits 1202, 1203 and an OR circuit 1204. The identifier SAVE_PENDING_IID maintains the identifier SAVE_PENDING_IID when the signal D_REL_SAVE is not "1". A signal W_SAVE is a signal indicating a completion of the SAVE instruction. An identifier W_IID indicates an instruction identifier of a completed instruction. When the signal W_SAVE is "1", a comparator 1205 compares the identifier SAVE_PENDING_IID and the identifier W_IID, and if the identifiers coincide, the comparator 1205 outputs "1", and an AND circuit 1206 resets the signal SAVE_PENDING. If the identifiers do not coincide, the signal SAVE_PENDING is maintained without being reset. Note that if the SAVE instruction is decoded again when the signal SAVE_PENDING is "1", the identifier SAVE_PENDING_IID is updated.

Although the generation circuit of the signal SAVE_PENDING and the identifier SAVE_PENDING_IID is explained in the above description, a generation circuit of the signal RESTORE_PENDING and the identifier RESTORE_PENDING_IID also has AND circuits 1208, 1209, 1212, OR circuits 1207, 1210, and a comparator 1211, and generates the signal RESTORE_PENDING and the identifier RESTORE_PENDING_IID through similar processing.

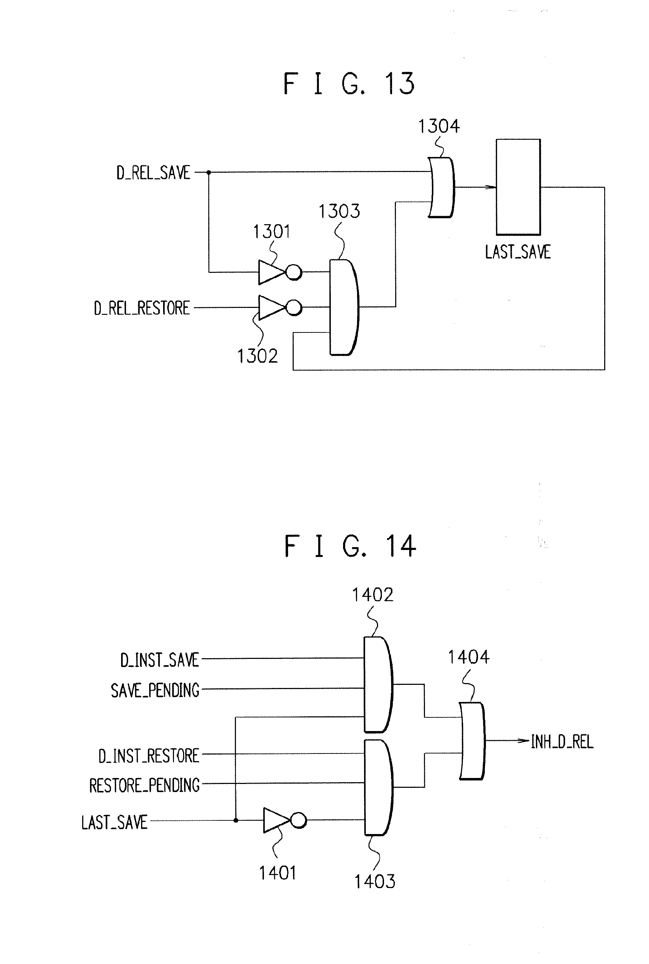

FIG. 13 is a diagram illustrating a configuration example of a generation circuit of the switching direction LAST_SAVE in FIG. 11. The generation circuit has inverters 1301, 1302, an AND circuit 1303 and an OR circuit 1304. The signal D_REL_SAVE is a signal indicating that the SAVE instruction is decoded. A signal D_REL_RESTORE is a signal indicating that the RESTORE instruction is decoded. When the signal D_REL_SAVE is "1", the switching direction LAST_SAVE becomes "1". When the signal D_REL_RESTORE is "1", the switching direction LAST_SAVE becomes "0". When both of the signals D_REL_SAVE and D_REL_RESTORE are "0", the switching direction LAST_SAVE is maintained. Note that there is no chance that the signals D_REL_SAVE and D_REL_RESTORE become "1" at the same time.

FIG. 14 is a diagram illustrating a configuration example of a generation circuit of an instruction decode inhibiting signal INH_D_REL. The generation circuit has an inverter 1401, AND circuits 1402, 1403, and an OR circuit 1404. A signal D_INST_SAVE is a signal indicating that an instruction to be decoded is the SAVE instruction. The signal SAVE_PENDING is a signal indicating that the SAVE instruction is in execution. A signal D_INST_RESTORE is a signal indicating that an instruction to be decoded is the RESTORE instruction. The signal RESTORE_PENDING is a signal indicating that the RESTORE instruction is in execution. The switching direction LAST_SAVE indicates that the instruction of switching the register window is in execution, and indicates a direction in which the register window is switched the last time. The signal INH_D_REL indicates a signal of inhibiting the instruction decode. When the signal INH_D_REL is "1", the instruction decode is inhibited in step S604 in FIG. 6. When the signal D_INST_SAVE is "1", the signal SAVE_PENDING is "1", and the switching direction LAST_SAVE is "1", the instruction decode inhibiting signal INH_D_REL becomes "1", and the instruction decode of the SAVE instruction is inhibited. When the signal D_INST_RESTORE is "1", the signal RESTORE_PENDING is "1", and the switching direction LAST_SAVE is "0", the instruction decode inhibiting signal INH_D_REL becomes "1", and the instruction decode of the RESTORE instruction is inhibited.

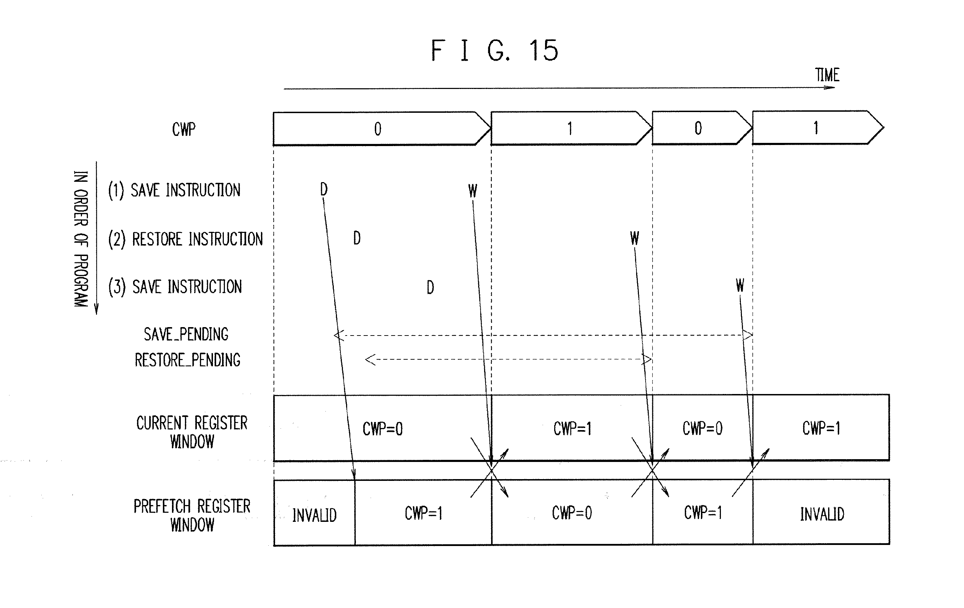

FIG. 15 is a diagram illustrating a read register window. Regarding the register window capable of being read from the fixed-point register 216, when the instruction of switching the register window is executed, it becomes possible to read the register window from two register windows of a register window indicated by the CWP and a register window after the completion of the instruction of switching the register window. Regarding the two register windows capable of being read, the register window indicated by the CWP is set as a current register window, and the register window to be read by a succeeding instruction of the instruction of switching the register window is set as a prefetch register window.

If an instruction of switching the register window is decoded when an instruction of switching the register window is not executed, the register window to be updated by the instruction of switching the register window becomes the prefetch register window, and can be read by the succeeding instruction. When the instruction of switching the register window is completed, a content of CWP of the prefetch register window becomes a content of CWP of the current register window. When, during the execution of the instruction of switching the register window, an instruction of switching the register window is decoded, the current register window and the prefetch register window are not changed. If, when the instruction of switching the register window is completed, the instruction of switching the register window whose direction of switching the register window is the opposite direction is in execution, the content of CWP of the current register window is changed to the content of CWP of the prefetch register window, and the content of CWP of the prefetch register window is changed to the content of CWP of the current register window.

When the CWP equals to 0, the content when the CWP equals to 0 is assigned to the content of the current register window. The prefetch register window at this time is invalid since the instruction of switching the register window is not in execution. When the SAVE instruction of (1) is decoded, the content when the CWP equals to 1 is assigned to the prefetch register window. When the RESTORE instruction of (2) is decoded, since the SAVE instruction is in execution, the current register window and the prefetch register window are not changed. The same applies to a case where the SAVE instruction of (3) is decoded, in which since the RESTORE instruction is in execution, the current register window and the prefetch register window are not changed. When the SAVE instruction of (1) is completed, the CWP is updated to 1. At this time, the content of the prefetch register window is assigned to the current register window. Further, when the SAVE instruction of (1) is completed, since the RESTORE instruction is in execution, the content of the current register window is assigned to the prefetch register window. When the RESTORE instruction of (2) is completed, the CWP is updated to 0. At this time, the content of the prefetch register window is assigned to the current register window. Further, when the RESTORE instruction of (2) is completed, since the SAVE instruction is in execution, the content of the current register window is assigned to the prefetch register window. When the SAVE instruction of (3) is completed, the CWP is updated to 1. At this time, the content of the prefetch register window is assigned to the current register window. Further, when the SAVE instruction of (3) is completed, since the RESTORE instruction is not in execution, the prefetch register window becomes invalid.

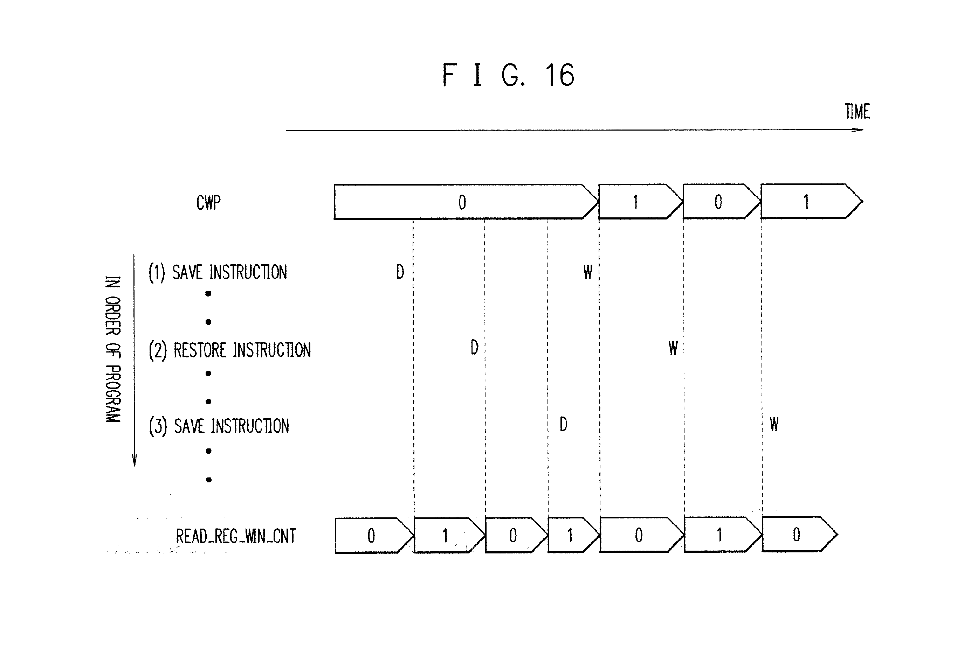

FIG. 16 is a diagram illustrating a read register window counter. As a function of designating a register window to be read at the time of execution of the instruction in FIG. 15, there is a need to perform control regarding that the reading is performed from which of the current register window and the prefetch register window at the time of the instruction decode. For this reason, the instruction decoder 204 includes a function of indicating a state of the register window. This function is realized by a read register window counter READ_REG_WIN_CNT performing control when decoding the instruction of switching the register window and when completing the instruction. Based on a value of the read register window counter READ_REG_MIN_CNT, the assignment is conducted, with respect to the instruction to be decoded, regarding that the reading is conducted from which of the current register window and the prefetch register window.

The value of the counter READ_REG_WIN_CNT is incremented by one when decoding the SAVE instruction, the value is decremented by one when completing the SAVE instruction, the value is decremented by one when decoding the RESTORE instruction, and the value is incremented by one when completing the RESTORE instruction. When the value of the counter READ_REG_WIN_CNT is "0", the assignment is conducted so that the reading is performed from the current register window, and when the value of the counter READ_REG_WIN_CNT is "+1" or "-1", the assignment is conducted so that the reading is performed from the prefetch register window.

When the instruction of switching the register window is not in execution under the state where the CWP equals to 0, the value of the counter READ_REG_WIN_CNT is "0". The instruction decoded at this time is read from the current register window. When the SAVE instruction of (1) is decoded, the value of the counter READ_REG_WIN_CNT is incremented by one to be "1". The assignment is conducted with respect to the succeeding instruction so that the reading is performed from the prefetch register window. When the RESTORE instruction of (2) is decoded, the value of the counter READ_REG_WIN_CNT is decremented by one to be "0". The assignment is conducted with respect to the succeeding instruction so that the reading is performed from the current register window. When the SAVE instruction of (3) is decoded, the value of the counter READ_REG_WIN_CNT is incremented by one to be "1". The assignment is conducted with respect to the succeeding instruction so that the reading is performed from the prefetch register window. After that, since the SAVE instruction of (1) is completed, the value of the counter READ_REG_WIN_CNT is decremented by one to be "0". The assignment is conducted with respect to the succeeding instruction so that the reading is performed from the current register window. When the RESTORE instruction of (2) is completed, the value of the counter READ_REG_WIN_CNT is incremented by one to be "1". The assignment is conducted with respect to the succeeding instruction so that the reading is performed from the prefetch register window. When the SAVE instruction of (3) is completed, the value of the counter READ_REG_WIN_CNT is decremented by one to be "0". The assignment is conducted with respect to the succeeding instruction so that the reading is performed from the current register window.

The execution of instruction is conducted from the reservation station 207. Through the above-described control, the register window to be read is assigned, and the decoded instruction is stored in the reservation station 207. It is not possible for the reservation station 207 to execute the instruction until when the preparation of execution is done, and thus the instruction remains in the reservation station 207. If, during this period of time, the instruction of switching the register window is completed, the positional relationship between the current register window and the prefetch register window is changed, so that there is a need to change the read register window assigned at the time of the instruction decode. At the time of completing the instruction of switching the register window, if a read register with an entry effective for the reservation station 207 is the current register window, the read register window is changed to the prefetch register window, and if it is the prefetch register window, the read register window is changed to the current register window, resulting in that the reading can be performed from a correct register window.

As described above, the fixed-point register 216 has the plurality of registers corresponding to the plurality of accessible register windows W0 to W7. When, during the execution of first instruction of changing the number of current register window (CWP) by one, a second instruction of changing the number of current register window (CWP) by one in a direction same as that of the first instruction is input, the instruction decoder 204 makes the process proceed to step S604 from step S603 in FIG. 6, and inhibits the decode of the second instruction until when the execution of the first instruction is completed. Further, when, during the execution of first instruction of changing the number of current register window (CWP) by one, a second instruction of changing the number of current register window (CWP) by one in a direction opposite to that of the first instruction is input, the instruction decoder 204 makes the process proceed to step S605 from step S603 in FIG. 6, and performs the decode of the second instruction during the execution of the first instruction.

The renaming register 215 stores the content of the fixed-point register 216. The latest register renaming map storage part 501 stores the latest register renaming map indicating the address of the renaming register 215. The saving register renaming map storage part 502 stores the old register renaming map indicating the address of the renaming register 215.

When the first instruction is decoded, the register renaming map stored in the latest register renaming map storage part 501 is stored in the saving register renaming map storage part 502, and the register renaming map of the current register window (CWP) corresponding to the first instruction is stored in the latest register renaming map storage part 501.

When the second instruction in the direction opposite to that of the first instruction is decoded, the register renaming map stored in the latest register renaming map storage part 501 is stored in the saving register renaming map storage part 502, and the register renaming map stored in the saving register renaming map storage part 502 is stored in the latest register renaming map storage part 501.

When the content of the renaming register 215 is written into the fixed-point register 216 by the completion of the instruction, the address of the register renaming map described above is invalidated.

According to the present embodiment, since the decode of the second instruction can be performed during the execution of the first instruction, the second instruction can be processed at high speed. Specifically, when the instruction of switching the register window input again during the execution of the instruction of switching the register window indicates a switching in a direction opposite to that of the instruction of switching the register window the last time, the instruction decode is conducted without being inhibited, so that it becomes possible to realize the operation without inhibiting the decode of the succeeding instruction. Accordingly, it becomes possible to execute the instruction at high speed, which leads to an improvement in performance.

A second instruction can be decoded during an execution of a first instruction, so that the second instruction can be processed at high speed.

Note that the above-described embodiments merely illustrate concrete examples of implementing the present embodiments, and the technical scope of the present embodiments is not to be construed in a restrictive manner by these embodiments. That is, the present embodiments may be implemented in various forms without departing from the technical spirit or main features thereof.

## Claims

1. A processing device, comprising:
a plurality of registers (216) configured to correspond to a plurality of accessible register windows; and
an instruction decoder (204) configured to inhibit, when, during an execution of a first instruction of changing a number of a current register window by one, a second instruction of changing the number of the current register window by one in a direction same as a direction of the first instruction is input, a decode of the second instruction until when the execution of the first instruction is completed, and to perform, when, during the execution of the first instruction of changing the number of the current register window by one, a second instruction of changing the number of the current register window by one in a direction opposite to the direction of the first instruction is input, a decode of the second instruction during the execution of the first instruction.

2. The processing device according to claim 1, further comprising:
a renaming register (215) configured to store a content of the register;
a latest register renaming map storage part (501) configured to store a latest register renaming map indicating an address of the renaming register; and
a saving register renaming map storage part (502) configured to store an old register renaming map indicating an address of the renaming register, wherein:
when the first instruction is decoded, the register renaming map stored in the latest register renaming map storage part is stored in the saving register renaming map storage part, and the register renaming map of the current register window corresponding to the first instruction is stored in the latest register renaming map storage part;
when the second instruction in the direction opposite to the direction of the first instruction is decoded, the register renaming map stored in the latest register renaming map storage part is stored in the saving register renaming map storage part, and the register renaming map stored in the saving register renaming map storage part is stored in the latest register renaming map storage part; and
when a content of the renaming register is written into the register by the completion of the instruction, the address of the register renaming map is invalidated.

3. The processing device according to claims 1 or 2, wherein:
the register window is formed of a plurality of registers; and
some registers forming the respective register windows are shared by some registers forming the register windows at both sides.

4. The processing device according to any one of claims 1 to 3, wherein:
the respective register windows have in registers, local registers and out registers; and
the plurality of register windows are formed in a ring shape.

5. A control method of a processing device having a plurality of registers (216) configured to correspond to a plurality of accessible register windows and an instruction decoder (204), the control method of the processing device comprising
inhibiting, when, during an execution of a first instruction of changing a number of a current register window by one, a second instruction of changing the number of the current register window by one in a direction same as a direction of the first instruction is input, a decode of the second instruction, by the instruction decoder, until when the execution of the first instruction is completed, and performing, when, during the execution of the first instruction of changing the number of the current register window by one, a second instruction of changing the number of the current register window by one in a direction opposite to the direction of the first instruction is input, a decode of the second instruction, by the instruction decoder, during the execution of the first instruction.
